# EUROPEAN PATENT APPLICATION

(11) **EP 4 592 541 A1**
(43) Date of publication of application: **30.07.2025**
(21) Application number: 25153491.3
(22) Date of filing: 23.01.2025
(51) Int. Cl.: F16B 7/04, F16B 7/18, F16B 37/02, F16B 37/04, F16B 37/08

(54) **THREADED ROD HANGER**

(30) Priority: 23.01.2024 US 202463623923 P; 15.01.2025 US 202519022282
(71) Applicant: Illinois Tool Works Inc., Glenview IL 60025 (US)
(72) Inventor: WIATROWSKI, Darrell A., Glenview, 60025 (US); PAPPAS, Steve A., Glenview, 60025 (US)
(74) Representative: HGF

(57) **Abstract**

A threaded rod hanger that is quickly and easily attachable to an overhead structure, that enables a threaded rod to be quickly and easily attached to the threaded rod hanger, and that enables the relative height of the threaded rod to be adjusted after the threaded rod is attached to the threaded rod hanger.

## Description

### PRIORITY CLAIM

This application claims priority to and the benefit of U.S. Provisional Patent Application No. 63/623,923, filed January 23, 2024, Docket No. 025140-2330/71418-US-P1, the entire contents of which are incorporated herein by reference.

### BACKGROUND

Various devices have been employed to hang threaded rods from structures such as overhead structures. For example, various device have been employed to hang threaded rods from structures wherein the threaded rods are employed to support fire sprinkler pipes from such overhead structures.

There is a continuing need to develop improved devices for more quickly hanging threaded rods from overhead structures.

### SUMMARY

Various embodiments of the present disclosure provide a threaded rod hanger: (1) that is quickly and easily attachable to an overhead structure; (2) to which a threaded rod is quickly and easily attachable; and (3) that enables the relative height of the threaded rod to be adjusted after being attached to the threaded rod hanger.

Additional features and advantages of the present disclosure are described in, and will be apparent from, the following Detailed Description and the Figures.

### BRIEF DESCRIPTION OF THE FIGURES

Figure 1 is a perspective view of a threaded rod hanger of one example one embodiment of the present disclosure, wherein the threaded rod hanger is shown attached to an overhead structure and supporting a threaded rod that is in turn supporting a pipe.
Figure 2 is a perspective view of the threaded rod hanger of Figure 1, wherein the threaded rod hanger is shown attached to an overhead structure (in a different position than shown in Figure 1) and supporting a threaded rod that is in turn supporting a pipe.
Figure 3 is a perspective view of the threaded rod hanger of Figure 1, wherein the threaded rod hanger is shown attached to part of an overhead structure and supporting a threaded rod.
Figure 4 is a perspective view of the threaded rod hanger of Figure 1, wherein the threaded rod hanger is shown supporting a threaded rod.
Figure 5 is a top view of a supporter plate of the threaded rod hanger of Figure 1, shown prior to being bent.
Figure 6 is a perspective view of the supporter plate of the threaded rod hanger of Figure 1, shown after being bent.
Figure 7 is a perspective view of the supporter plate securely holding a first rod receiver of the threaded rod hanger of Figure 1.
Figures 8, 9, and 10 are perspective views of a push button assembly of the threaded rod hanger of Figure 1.
Figure 11 is a perspective view of a threaded rod hanger of an alternative embodiment of the present disclosure, wherein the threaded rod hanger is shown attached to part of an overhead structure and supporting a threaded rod.
Figure 12 is a side view of the threaded rod hanger of Figure 11, wherein the threaded rod hanger is shown attached to part of an overhead structure and supporting a threaded rod.
Figure 13 is a perspective view of a threaded rod hanger of another alternative embodiment of the present disclosure, wherein the threaded rod hanger is attachable to an overhead structure, and wherein the threaded rod hanger is shown supporting a threaded rod.
Figure 14 is a front view of the threaded rod hanger of Figure 13 supporting a threaded rod.
Figure 15 is a side view of the threaded rod hanger of Figure 13 supporting a threaded rod.
Figure 16 is a partial cross-sectional side view of the threaded rod hanger of Figure 13 supporting a threaded rod.
Figure 17 is an exploded perspective view of the threaded rod hanger of Figure 13 and a threaded rod.
Figure 18 is a bottom view of the threaded rod hanger of Figure 13.
Figure 19 is a top view of the threaded rod hanger of Figure 13.
Figure 20 is a top perspective view of a push button assembly of the threaded rod hanger of Figure 13.
Figure 21 is a bottom perspective view of the push button assembly of the threaded rod hanger of Figure 13.
Figures 22, 23, 24, 25, and 26 are perspective and side views of the components of a second threaded rod receiver (that includes a push button assembly) of the threaded rod hanger of Figure 13.
Figures 27 and 28 are perspective views of a combined supporter and first threaded rod receiver of the threaded rod hanger of Figure 13.
Figure 29 is a perspective view of the threaded rod hanger of Figure 13 before being attached to part of an overhead structure.
Figure 30 is a perspective view of the threaded rod hanger of Figure 13 after being attached to part of an overhead structure.

### DETAILED DESCRIPTION OF EXAMPLE EMBODIMENTS

While the features, devices, and apparatus described herein may be embodied in various forms, the drawings show and the specification describe certain exemplary and non-limiting embodiments. Not all of the components shown in the drawings and described in the specification may be required, and certain implementations may include additional, different, or fewer components. Variations in the arrangement and type of the components; the shapes, sizes, and materials of the components; and the manners of connections of the components may be made without departing from the spirit or scope of the claims. Unless otherwise indicated, any directions referred to in the specification reflect the orientations of the components shown in the corresponding drawings and do not limit the scope of the present disclosure. Further, terms that refer to mounting methods, such as mounted, attached, connected, and the like, are not intended to be limited to direct mounting methods but should be interpreted broadly to include indirect and operably mounted, attached, connected and like mounting methods. This specification is intended to be taken as a whole and interpreted in accordance with the principles of the present disclosure and as understood by one of ordinary skill in the art.

Various embodiments of the present disclosure provide a threaded rod hanger configured to facilitate hanging a threaded rod to an overhead structure. In various embodiments, the threaded rod hanger: (1) is quickly and easily attachable to an overhead structure; and (2) enables a threaded rod to be quickly and easily attached to the threaded rod hanger.

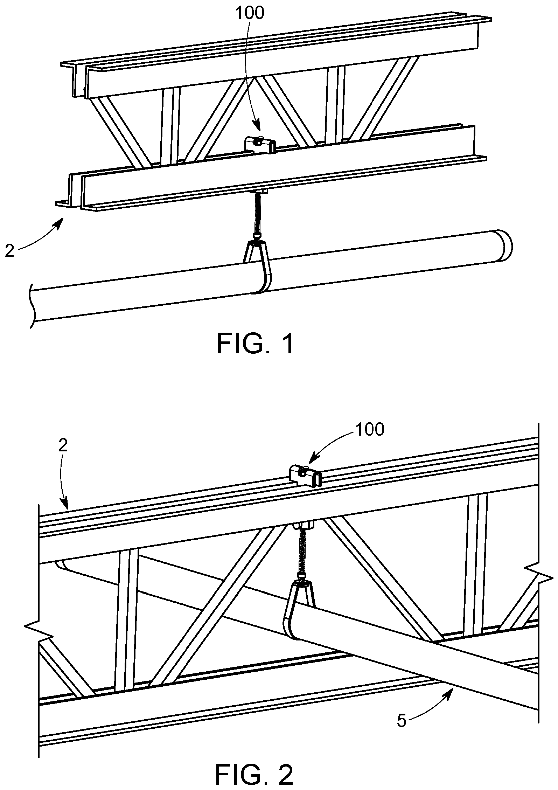

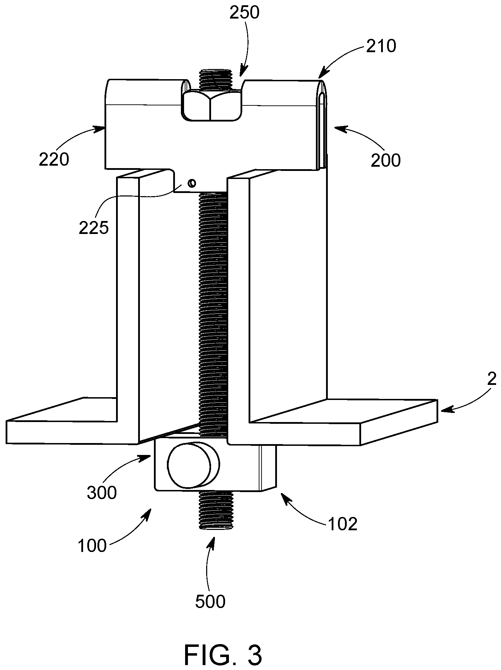

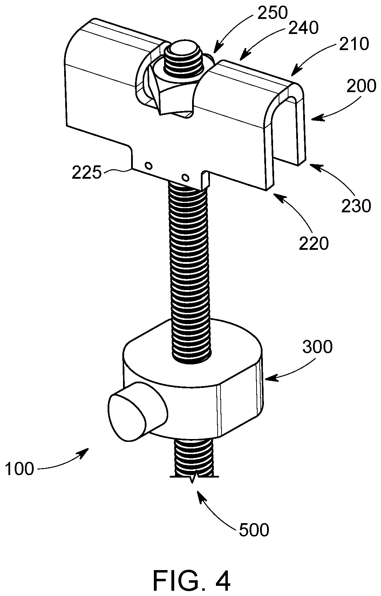

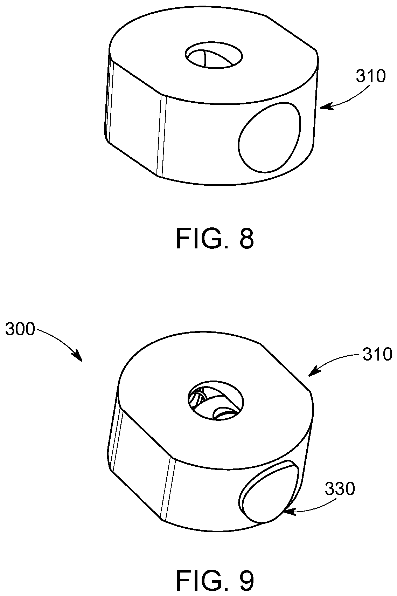

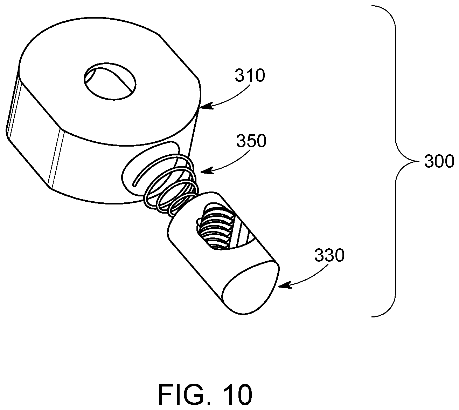

Figures 1 to 10 illustrate a threaded rod hanger 100 of one example embodiment of the present disclosure. Figures 1, 2, and 3 also show the threaded rod hanger 100 attached to an overhead structure 2 in different manners and/or positions.

The threaded rod hanger 100 generally includes: (1) a supporter 200; (2) a first threaded rod receiver 250; and (3) a second threaded rod receiver 300. The first threaded rod receiver 250 is securely attached to the supporter 200 and thus these components function together as a combined supporter and threaded rod receiver. In other words, the supporter 200 and the first threaded rod receiver 250 are configured to co-act to engage and hold the threaded rod 500.

The supporter 200 includes a support plate 210 configured to be positioned on top of part of an overhead structure and to rest on that overhead structure. The support plate 210 is configured to receive and securely hold the first rod receiver 250. The support plate 210 includes a first wall 220, a second wall 230 and a wall connector 240.

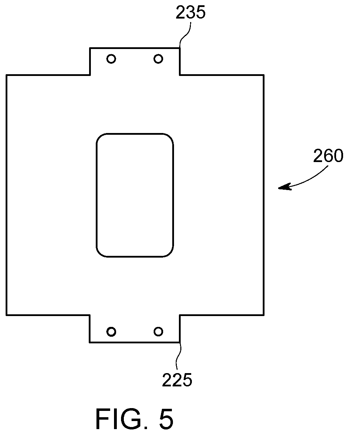

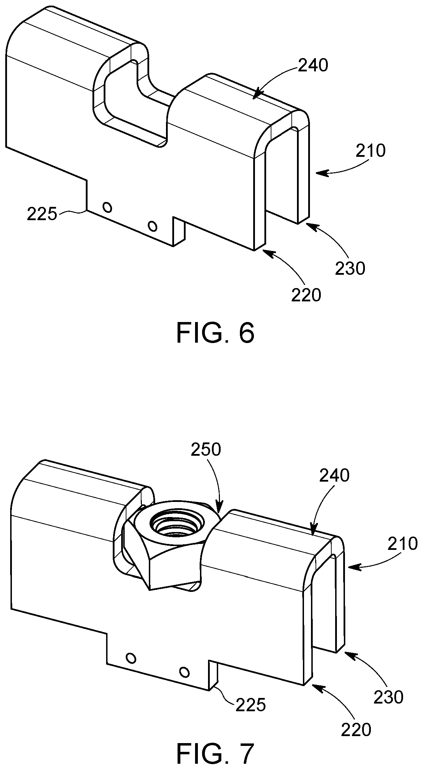

In this example embodiment, the support plate 210 is a single monolithically formed member metal sheet formed from a substantially rectangular cut 260 shown in Figure 5 that is bent into an upside down U-shape such as shown in Figures 6 and 7. During the bending process, the first threaded rod receiver 250 is positioned in the cut 260 such that the support plate 210 securely holds the first threaded rod receiver 250 after cut 260 is bent into an upside down U-shape. The first threaded rod receiver 250 which is a square metal (steel) nut in this example is trapped by the support plate 210 because it is restricted by the bent metal sheet and cannot move up or down, and cannot rotate freely as the square nut's corners are stuck between walls of the bent sheet of the support plate 210. Trapping the first threaded rod receiver 250 enables the installation of threaded rod 500 in the threaded rod hanger 100 without the need of tools. It should be appreciated that alternative shapes of the first threaded rod receiver 250 and/or the cut 260 can be employed to prevent threaded rod receiver 250 from up and down movement and rotation.

The support plate 210 includes two downwardly extending anti-rotation feet 225 and 235 that are configured to extend between the beams of the overhead structure 2 such as shown in Figures 1 and 2 to prevent rotation of the support plate 210 relative to that structure 2.

The second threaded rod receiver 300 includes a push button assembly including: (1) a push button receiver 310; (2) a threaded push button 330; and (3) a biasing member 350.

The push button receiver 310: (a) has two opposing sides (not labeled) that are each machined flat for the use of a wrench (not shown) to torque down the receiver 310, (b) a first hole (not labeled) formed in the receiver 310 (such as by drilling) and configured to receive a threaded rod such as threaded rod 500, and (c) a second hole (not labeled) formed in the receiver (such as by drilling) and configured to receive the biasing member 350 (such as a conical compression spring) and the threaded push button 330. This second hole does not go all the way through the receiver 310. Pressing the threaded push button 330 enables the threaded rod 500 to move freely through receiver 310 until in a desired position, and release of the push button 330 causes the inner threads (not labeled) of the push button 330 to engage the outer threads of the threaded rod 500. The push button receiver 310 and the threaded push button 330 can include suitable engagement surfaces (not shown) that prevent the push button 330 from being completely removed from the receiver 310.

The second threaded rod receiver 300 is thus configured to: (a) receive a threaded rod such as threaded rod 500; (b) enable height adjustment of the threaded rod 500; and (c) to secure the assembly to the overhead structure (such as a web bar joist) to threaded rod hanger 100 from moving vertically.

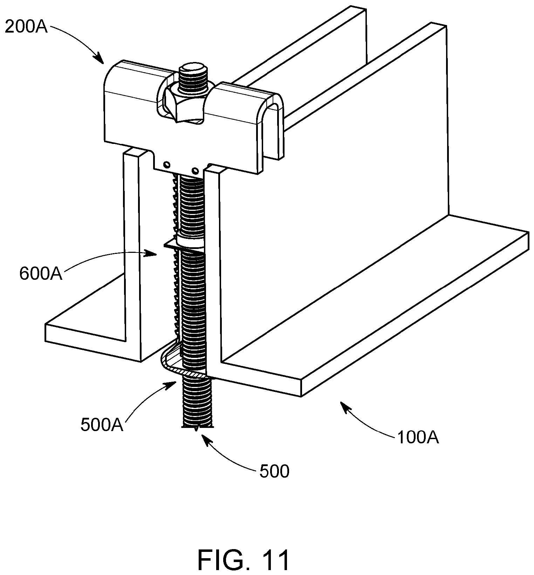

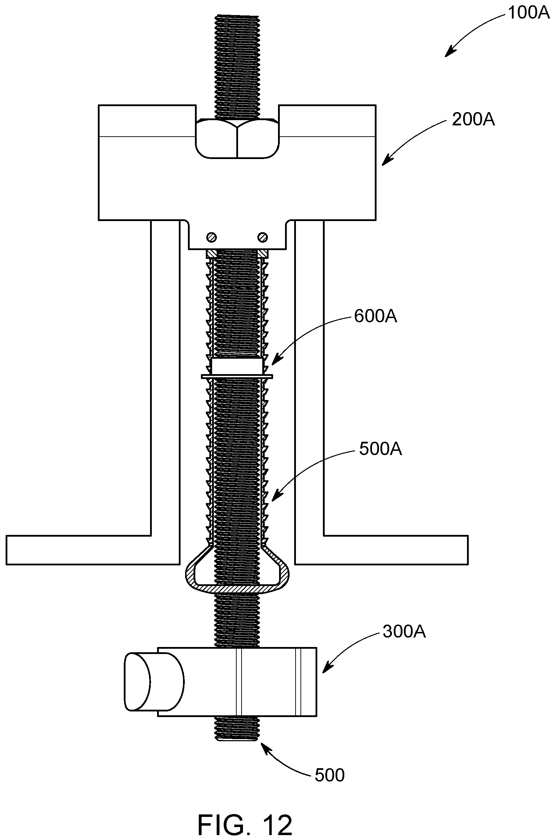

Figures 11 and 12 illustrate an alternative threaded rod hanger 100A of another example embodiment of the present disclosure. Figures 11 and 12 also show the threaded rod hanger 100A attached to an overhead structure (not labeled). This embodiment is substantially similar to the above described example embodiment, but includes certain additional components that are generally described below. Thus, the substantially similar components to the embodiment described above are not again described herein for brevity.

Similar to the above embodiment, the threaded rod hanger 100A generally includes: (1) a supporter 200A; (2) a first threaded rod receiver (not labeled); and (3) a second threaded rod receiver 300A.

Additionally, the threaded rod hanger 100A includes assembly members 500A and 600A that facilitate the assembly and installation of the threaded rod hanger 100A as well as the insertion of the threaded rod 500.

Assembly member 500A includes a guide (such as a plastic guide) that extends along the threaded rod 500 and is configured to provide a mechanism that enables the installer to grip the supporter 200 and position it between and on top of the bar joist structure in preparation for the connection of the threaded rod 500.

Assembly member 600A includes a joist engager connected to the guide, configured to receive and engage the assembly member 500A, and engage with the bottom surface of the bar joist structure, and thus configured to provide a temporary mechanism to secure the supporter 200 in place while the installer connects the threaded rod 500 to the rod hanger assembly 200. Assembly member 500A and assembly member 600A do not serve a purpose after the second rod receiver 300A is secured in place.

It should be appreciated that these components can be made from any suitable materials in accordance with the present disclosure.

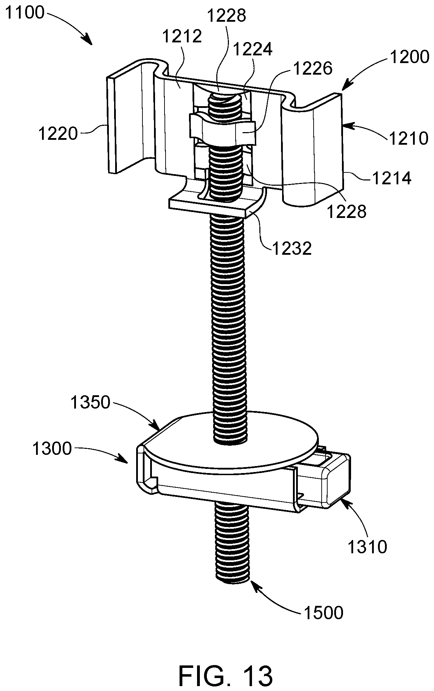

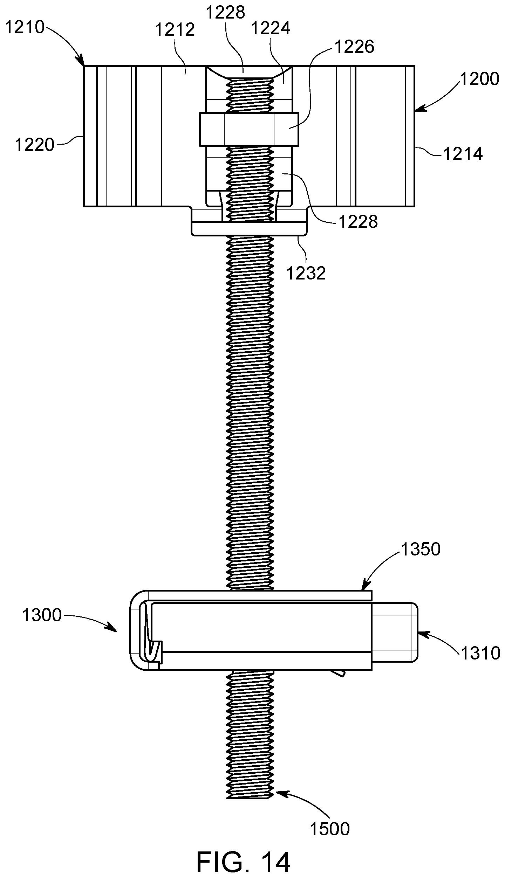

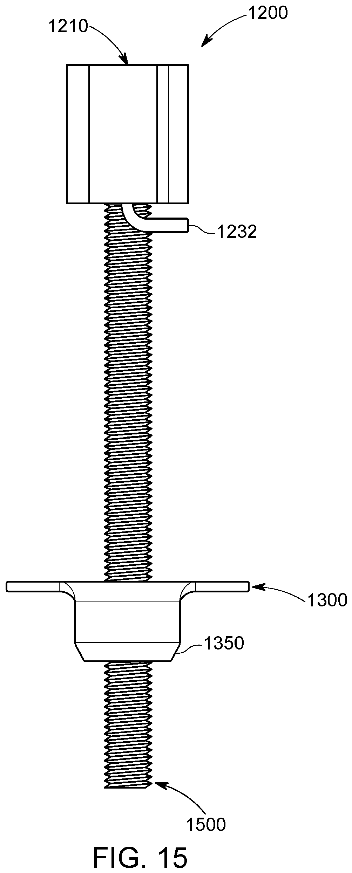

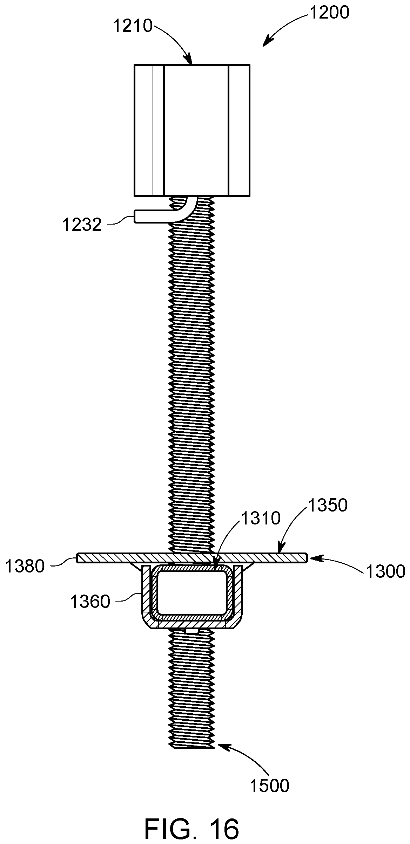

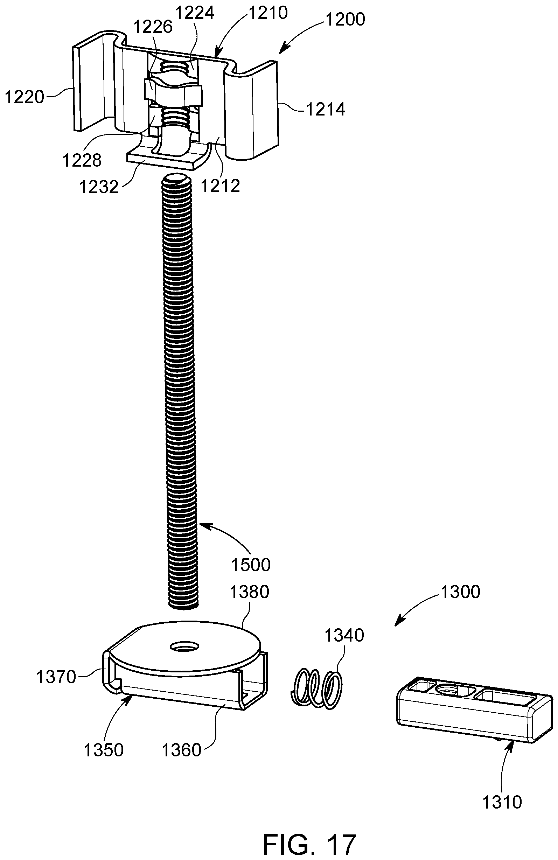

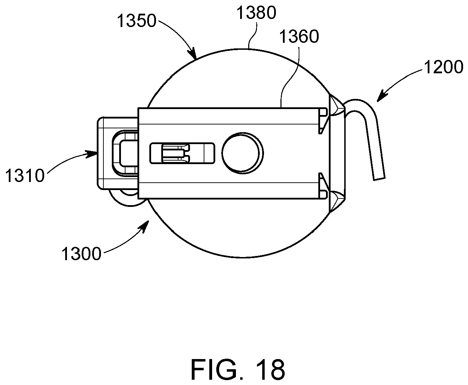

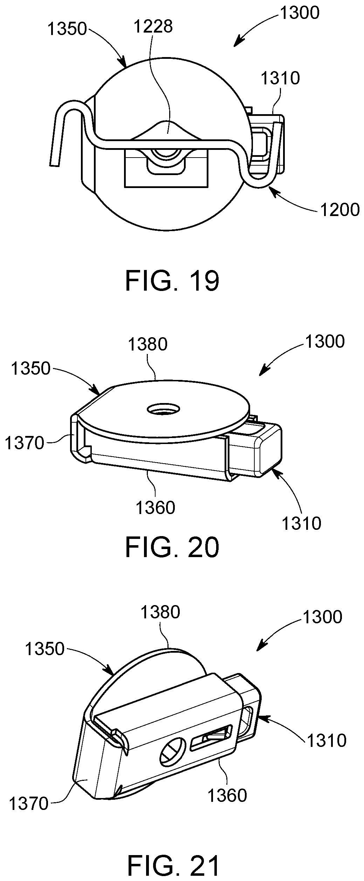

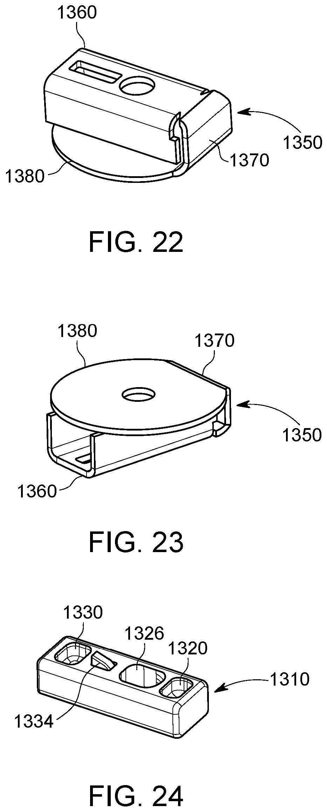

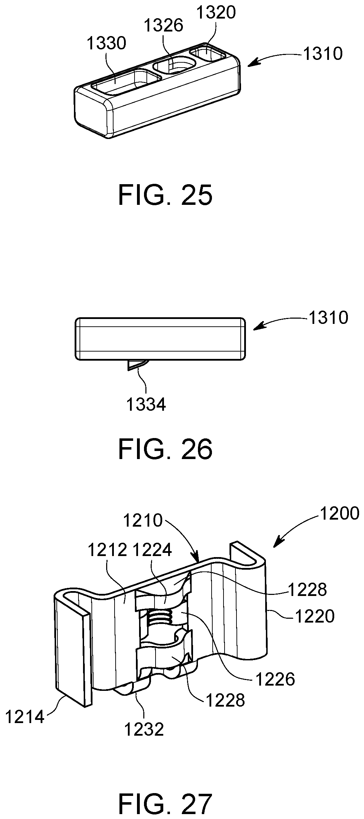

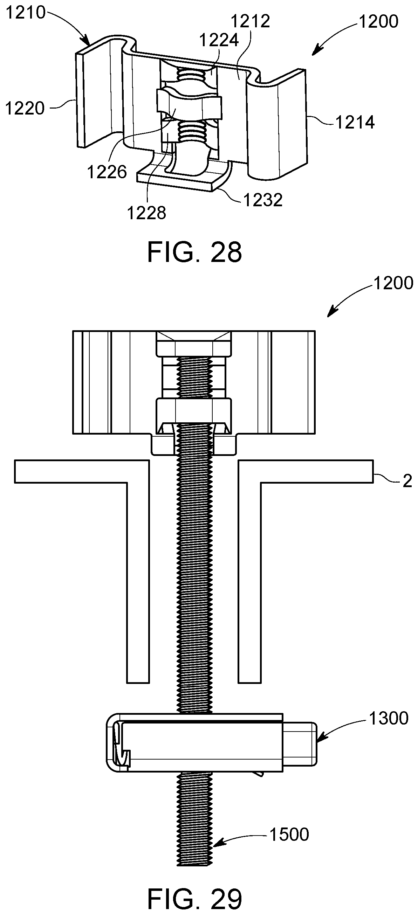

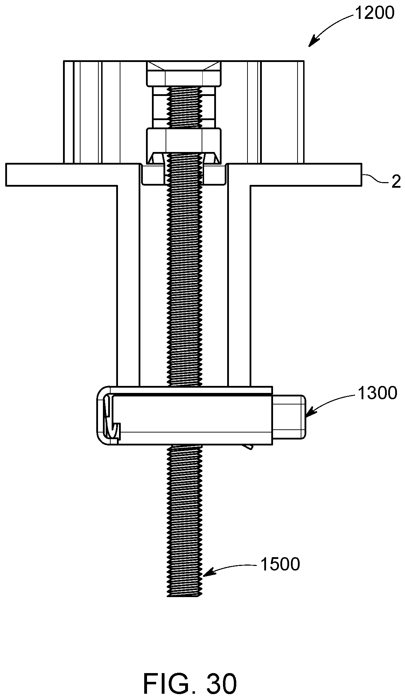

Figures 13 to 30 illustrate a threaded rod hanger 1100 of another example embodiment of the present disclosure. Figures 29 and 30 show the threaded rod hanger 1100 being securely attached to the beams (not labeled) of an overhead structure 2.

The threaded rod hanger 1100 generally includes: (1) a combined supporter and first threaded rod receiver 1200; and (2) a second threaded rod receiver 1300.

The combined supporter and first threaded rod receiver 1200 includes a support plate 1210 that includes various parts that function as a supporter and various parts that function as a first threaded rod receiver. More specifically, the support plate 1210 includes a central body 1212, a first arm 1214 extending from a first end of the central body 1212, and a second arm 1220 extending from a second end of the central body 1212. The first arm 1214 includes a curved section (not labeled) connected to the central body 1212 and a straight section (not labeled) connected to the curved section. Likewise, the second arm 1220 includes a curved section (not labeled) connected to the central body 1212 and a straight section (not labeled) connected to the curved section. These portions of the support plate 1210 include flat bottom edges and are configured to rest on the respective beams (not labeled) of the overhead structure 2 such as shown in Figure 30 and thus to support the entire threaded rod hanger 1100 as well as the threaded rod 1500 attached thereto.

The support plate 1210 of the combined supporter and first threaded rod receiver 1200 also includes offset thread engagers 1224, 1226, and 1228 that are each connected to and extend transversely outwardly from the central body 1212 of the support plate 1210 and that each include inner threads (not labeled) configured to engage the outer threads of the threaded rod 1500. The offset thread engagers 1224, 1226, and 1228 are configured to co-act to receive, threadably, engage and adjustably hold the threaded rod 1500.

The support plate 1210 also includes a downwardly extending anti-rotation foot 1232 connected to the central body 1212 and configured to extend between the beams of the structure 2 to prevent rotation of the threaded rod hanger 1100 relative to the overhead structure 2 when in the final installed position. The anti-rotation foot 1232 partially defines an opening (not labeled) that the threaded rod 1500 can extend through.

The support plate 1210 also includes an upper stop 1228 connected to and extending outwardly from the central body 1212 and configured to limit upward movement of the threaded rod 1500.

In this example embodiment, the support plate 1210 including all of the above described parts are formed from a single metal sheet; but it should be appreciated that the support plate 1210 can be formed in other manners and from other suitable materials.

The second threaded rod receiver 1300 includes a push button assembly including: (1) a threaded push button 1310; (2) a push button receiver 1350; and (3) a biasing member 1340.

The threaded push button 1310 includes a top wall (not labeled), a bottom wall (not labeled), a first side wall (not labeled), a second side wall (not labeled), a first end wall (not labeled), a second end wall (not labeled), and a plurality of internal walls (not labeled).

The threaded push button 1310 and specifically the internal walls of the threaded push button 1310 define a first internal opening 1320 sized, shaped, and otherwise configured to improve manufacturability of the part by reducing metal required, a second internal opening 1326 sized, shaped, and otherwise configured to receive the threaded rod 1500, and a third internal opening 1330 sized, shaped, and otherwise configured to improve manufacturability of the part by reducing metal required. The threaded push button 1310 includes internal partial threads that extend into the second internal opening and that are configured to engage and disengage from the threaded rod 1500.

The threaded push button 1310 also includes a downwardly extending retaining tab 1334 configured to engage part of the push button receiver 1350 to prevent the threaded push button 1310 from fully exiting the push button receiver 1350.

The push button receiver 1350 includes: (1) a generally U-shaped base 1360; (2) a substantially circular top plate 1380 connected to the top of the U-shaped base 1360; and (3) an end wall 1370 connected a flat side of the top plate 1380 and an end of the U-shaped base 1360.

The U-shaped base 1360, the top plate 1380, and the end wall 1370 define a button receiving pocket (not labeled) that is configured to receive the push button 1310 and the biasing member 1340 such that the biasing member 1340 biases the push button 1310 outwardly of the receiver 1350 and such that the inner threads of the push button 1310 engage the threaded rod 1500. The U-shaped base 1360 is sized, shaped, and otherwise configured to engage a bottom surface of the beams of the overhead structure.

The top plate 1380 defines a first hole (not labeled) configured such that the threaded rod 1500 can move and extend freely through the top plate 1380. The top plate 1380 is configured to engage a bottom part of the overhead structure 2 such shown in Figure 30.

Pressing the threaded push button 1310 enables the threaded rod 1500 to move freely through receiver 1350 and the push button 1310 until in a desired position, and release of the push button 1310 causes the inner partial threads of the push button 1310 to engage the outer threads of the threaded rod 1500.

The second threaded rod receiver 1300 is thus configured to: (a) receive a threaded rod such as threaded rod 1500; and (b) secure the threaded rod hanger 1100 to the overhead structure.

Various changes and modifications to the above-described embodiments described herein will be apparent to those skilled in the art. These changes and modifications can be made without departing from the spirit and scope of this present subject matter and without diminishing its intended advantages.

Certain embodiments of the invention are described in the following clauses :
Clause 1 : A threaded rod hanger comprising: a combined supporter and first threaded rod receiver including a support plate including: a central body, a first arm extending from a first end of the central body, a second arm extending from a second end of the central body, and at least one thread engager, each thread engager including inner threads configured to engage outer threads of a threaded rod, each thread engager positioned to co-act to receive, threadably engage, and hold the threaded rod; and a second threaded rod receiver including: a push button configured to engage the threaded rod, a push button receiver configured to receive the push button, and a biasing member in the push button receiver and configured to bias the push button.
Clause 2 : The threaded rod hanger of Clause 1, wherein the combined supporter and first threaded rod receiver is formed from a single metal sheet.
Clause 3 : The threaded rod hanger of Clause 1, wherein each of the first arm and the second arm includes a curved section connected to the central body and a straight section connected to the curved section.
Clause 4 : The threaded rod hanger of Clause 1, wherein each of the thread engagers is connected to and extends outwardly from the central body.
Clause 5 : The threaded rod hanger of Clause 1, which includes at least two offset thread engagers.
Clause 6 : The threaded rod hanger of Clause 4, which includes at least two offset thread engagers.
Clause 7 : The threaded rod hanger of Clause 1, which includes three spaced-apart offset thread engagers.
Clause 8 : The threaded rod hanger of Clause 1, wherein the support plate includes a downwardly extending anti-rotation foot connected to the central body and defining an opening that the threaded rod can extend through.
Clause 9 : The threaded rod hanger of Clause 1, wherein the push button includes internal threads configured to engage the thread of the threaded rod.
Clause 10 : The threaded rod hanger of Clause 1, wherein the push button has partial internal threads, wherein the biasing member is positioned to cause the internal thread to engage the threads of the threaded rod.
Clause 11 : The threaded rod hanger of Clause 1, wherein the push button includes a retaining tab configured to prevent the push button from fully exiting the push button receiver.
Clause 12 : A threaded rod hanger comprising : a support plate; a first threaded rod receiver secured to the support plate, the first threaded rod receiver including inner threads configured to engage outer threads of a threaded rod, and configured to receive, threadably engage, and hold the threaded rod; and a second threaded rod receiver including : a push button configured to engage the threaded rod, a push button receiver configured to receive the push button, and a biasing member in the push button receiver and configured to bias the push button.
Clause 13 : The threaded rod hanger of Clause 12, wherein the support plate is formed from a single metal sheet.
Clause 14 : The threaded rod hanger of Clause 12, wherein the push button includes internal threads configured to engage the outer threads of the threaded rod.
Clause 15 : The threaded rod hanger of Clause 12, wherein the push button has partial internal threads, wherein the biasing member is configured to cause the internal thread to engage the outer threads of the threaded rod.
Clause 16 : The threaded rod hanger of Clause 12, wherein the push button includes a retaining tab configured to prevent the push button from fully exiting the push button receiver.

## Claims

1. A threaded rod hanger comprising:
a combined supporter and first threaded rod receiver including a support plate including:
a central body,
a first arm extending from a first end of the central body,
a second arm extending from a second end of the central body, and
at least one thread engager, each thread engager including inner threads configured to engage outer threads of a threaded rod, each thread engager positioned to co-act to receive, threadably engage, and hold the threaded rod; and
a second threaded rod receiver including:
a push button configured to engage the threaded rod,
a push button receiver configured to receive the push button, and
a biasing member in the push button receiver and configured to bias the push button.

2. The threaded rod hanger of Claim 1, wherein the combined supporter and first threaded rod receiver is formed from a single metal sheet.

3. The threaded rod hanger of Claim 1, wherein each of the first arm and the second arm includes a curved section connected to the central body and a straight section connected to the curved section.

4. The threaded rod hanger of Claim 1, wherein each of the thread engagers is connected to and extends outwardly from the central body.

5. The threaded rod hanger of Claim 1 or 4, which includes at least two offset thread engagers.

6. The threaded rod hanger of Claim 1, which includes three spaced-apart offset thread engagers.

7. The threaded rod hanger of Claim 1, wherein the support plate includes a downwardly extending anti-rotation foot connected to the central body and defining an opening that the threaded rod can extend through.

8. The threaded rod hanger of Claim 1, wherein the push button includes internal threads configured to engage the thread of the threaded rod.

9. The threaded rod hanger of Claim 1, wherein the push button has partial internal threads, wherein the biasing member is positioned to cause the internal thread to engage the threads of the threaded rod.

10. The threaded rod hanger of Claim 1, wherein the push button includes a retaining tab configured to prevent the push button from fully exiting the push button receiver.

11. A threaded rod hanger comprising:
a support plate;
a first threaded rod receiver secured to the support plate, the first threaded rod receiver including inner threads configured to engage outer threads of a threaded rod, and configured to receive, threadably engage, and hold the threaded rod; and
a second threaded rod receiver including:
a push button configured to engage the threaded rod,
a push button receiver configured to receive the push button, and
a biasing member in the push button receiver and configured to bias the push button.

12. The threaded rod hanger of Claim 11, wherein the support plate is formed from a single metal sheet.

13. The threaded rod hanger of Claim 11, wherein the push button includes internal threads configured to engage the outer threads of the threaded rod.

14. The threaded rod hanger of Claim 11, wherein the push button has partial internal threads, wherein the biasing member is configured to cause the internal thread to engage the outer threads of the threaded rod.

15. The threaded rod hanger of Claim 11, wherein the push button includes a retaining tab configured to prevent the push button from fully exiting the push button receiver.
